# EUROPÄISCHE PATENTSCHRIFT

(11) **EP 2 333 691 B1**
(45) Veröffentlichungstag und Bekanntmachung des Hinweises auf die Patenterteilung: **10.04.2013**
(21) Anmeldenummer: 09179122.8
(22) Anmeldetag: 14.12.2009
(51) Int. Cl.: G06K 7/10, G02B 6/38, G02B 6/44, G06K 7/00

(54) **Verbindungskabel zur elektrischen oder Lichtwellenleiterverbindung zweier Systemgeräte**
Optical or electrical cable for connecting two devices
Cable optique où électrique pour connecter deux dispositifs

(43) Veröffentlichungstag der Anmeldung: 15.06.2011
(73) Patentinhaber: KTS Kommunikationstechnik und Systeme GmbH, 41238 Mönchengladbach (DE)
(72) Erfinder: Dr.-Ing. Kotyrba, Gregor, 41238 Mönchengladbach (DE)
(74) Vertreter: Meyer, Ludgerus

(56) Entgegenhaltungen:
- EP-A2- 1 837 798
- WO-A1-2007/142645
- FR-A1- 2 853 982
- US-A1- 2009 015 383

## Beschreibung

Die Erfindung betrifft ein Verbindungskabel zur elektrischen oder Lichtwellenleiterverbindung zweier Systemgeräte nach dem Oberbegriff des Anspruchs 1.

Seit etwa zwei Jahrzehnten sind zur Lokalisierung und Identifizierung sich im Nahbereich eines Lesegeräts befindlicher Objekte RFID-Systeme bekannt, die insbesondere im Bereich der Logistik erhebliche Vorteile bieten.

Ein zu bestimmendes Objekt ist dabei mit einem in der Regel passiven Transponder versehen, der von einem Sende-/Empfangsgerät (RFID-Reader oder Leseeinheit) ausgesandte elektromagnetischer Energie empfängt, diese in Betriebsenergie wandelt und dann ein Identifikationssignal aussendet, das von dem RFID-Reader empfangen werden kann, so dass das vom Transponder ausgesandte Signal ausgewertet werden kann.

Die RFID-Transpondertechnologie hat auch in Kabelmanagementsystemen Einzug gehalten, bei denen Energieversorgungskabel oder Datenkabel an ihren jeweiligen Steckern mit Transpondern versehen werden und die Buchsenbelegung von Anschlussgeräten, die mit Steckern derartiger Kabel belegt sind, ausgewertet wird. In den Anschlussgeräten vorhandene RFID-Reader können daher bei Anschluss von Kabeln, die auf diese Weise mit Transponder versehen sind, diese Kabel identifizieren und die erhaltenen Signale in geeigneter Weise verarbeiten.

Ein solches Kabelmanagementsystem ist beispielsweise aus der DE 102 44 304 B3 bekannt geworden. Bei diesem System sind beide Stecker eines Patchkabels mit je einem Transponder ausgerüstet. Jeder Anschluss in einem Patchfeld ist mit einer Readerspule eines Readers ausgerüstet, wobei der Reader in Verbindung mit einer Auswerteeinheit steht. Die Transponder enthalten jeweils eine individuelle Kennung, so dass jeder Steckverbinder mittels der Reader identifizierbar ist. Damit ein solches System funktionsfähig ist, ist es erforderlich, dass alle verwendete Patchkabel unterschiedliche Transponder bzw. unterschiedlich programmierte Transponder enthalten. Die Verwendung standardisierter Kabel ohne individuelle Kennung ermöglicht allerdings keine gezielte Zuordnung zwischen einzelnen Buchsen einer ersten Verteilereinheit und anderen Buchsen einer zweiten Verteilereinheit.

Aus der EP 1 837 798 A2 ist ein RFID-Antennenbrückensystem bekannt, bei dem eine erste Antenne in die Nähe einer Antenne eines Tags gebracht wird und das über die Antenne empfangene Signal über eine Kabelverbindung an eine zweite Antenne übertragen wird, die einer Readereinheit zugeordnet ist. Damit lässt sich die Entfernung, über die das Signal des Tags erfasst werden kann, erhöhen.

Der Erfindung liegt die Aufgabe zugrunde, ein Verbindungskabel zur Verbindung zweier mit jeweils einem Anschlusselement versehener Systemgeräte anzugeben, das eine sichere Zuordnung eines Systemgeräts, an das ein Ende des Verbindungskabels angeschlossen ist, zu einem anderen Systemgerät, das an das zweite Ende des Verbindungskabels angeschlossen ist, gestattet.

Die vorgenannte Aufgabe wird durch die im Anspruch 1 angegebene Erfindung gelöst. Vorteilhafte Weiterbildungen der Erfindung sind in Unteransprüchen angegeben.

Ein dergestalt ausgerüstetes Verbindungskabel weist daher an seinen Enden lediglich Antennenanordnungen auf, die über eine Leitungsverbindung elektrisch miteinander verbunden sind. Weitere Identifizierungen sind nicht vorgesehen, so dass ein solches Verbindungskabel keinerlei eigene Individualisierung erfordert. Die Antennenanordnungen sind vorzugsweise durch eine parallel zum Verbindungskabel verlaufende elektrische Leitungsverbindung miteinander gekoppelt. Die Leitungsverbindung kann an der Außenseite des Verbindungskabels befestigt sein oder auch in das Verbindungskabel integriert sein.

Vorzugsweise sind die Antennenanordnungen direkt in die Kopplungselemente der Verbindungskabel integriert.

Die erste und die zweite Antennenanordnung sind passiv elektrisch miteinander verbunden. Es ist keine Energieversorgung der aus den Antennenanordnungen und der diese verbindenden Leitungsverbindung gebildeten Übertragungseinheit erforderlich, so dass ein diese Einheit enthaltendes Kabel vollständig passiv ist.

Ein wesentlicher Gedanke der Erfindung liegt darin, dass trotz einer möglichen größeren Entfernung zwischen Leseeinheit und Transponder RFID-Technologie für die Nahfeldübertragung verwendet werden kann. Dies liegt daran, dass einerseits die erste Antennenanordnung in unmittelbare Nähe der Leseeinheit und andererseits die zweite Antennenanordnung in unmittelbarer Nähe des Transponders gebracht wird, der an einem entfernten Objekt befestigt ist. Zwischen den jeweiligen Antennen und der Leseeinheit bzw. dem Transponder findet daher lediglich eine Nahfeldübertragung von Hochfrequenzenergie statt, wobei diese auch als induktive Übertragung betrachtet werden kann. Die Antennenanordnungen und ihre Leitungsverbindung miteinander sind identifikationslos und sie dienen lediglich der Übertragung von Energie und Identifikationssignalen von der Leseeinheit zum Transponder und umgekehrt.

Die Leseeinheit ist als Sende-/Empfangseinheit ausgebildet, wodurch eine Verwendung passiver Transponder möglich ist, die ihre Betriebsenergie aus dem von der Sende-/Empfangseinheit abgestrahlten Signal erhalten und dann ein Antwortsignal abgeben können, das von der Lese-/Empfangseinheit empfangen und weiter verarbeitet wird.

Die verwendeten Antennenanordnungen sind insbesondere als Luftspulen ausgebildet, aber sie können auch ferritgebettete Spulen oder um Ferritkerne gewickelte Spulen enthalten.

In alternativer Ausbildung können die Antennenanordnungen auch aus festen oder auf flexible Leiterplatten aufgedruckte Leiterbahnstrukturen gebildet sein.

Zur frequenzselektiven Signal- und Energieübertragung können die verwendeten Antennenanordnungen auf die jeweils verwendeten RFID-Frequenzen abgestimmte Schwingkreise darstellen. Die in den Antennenanordnungen verwendeten Spulen können dazu mit passiven weiteren Komponenten, z. B. Kondensatoren, kombiniert werden. Zur Optimierung der Energie- und/oder Signalübertragung können die verwendeten Antennenanordnungen auch Anpassnetzwerke aus konzentrierten und/oder gedruckten Bauelementen enthalten.

Die Verbindung zwischen den Antennenanordnungen erfolgt vorzugsweise über geschirmte oder ungeschirmte Zweidrahtleitungen, die parallele oder verdrillte Drähte enthalten können, oder auch als Koaxialleitung ausgebildet sein können.

In bevorzugter Ausgestaltung der Erfindung ist die erste Antennenanordnung mit einem ersten Ende eine Verbindungskabels, beispielsweise einer elektrischen Verbindung oder einer Lichtwellenleiterverbindung zwischen erstem und zweitem Ort gekoppelt, wobei die zweite Antennenanordnung mit dem zweiten Ende des Verbindungskabels verbunden ist. Wenn daher die Leseeinheit z. B. in einem ersten Patchpanel angeordnet ist und ein Transponder an einem zweiten Patchpanel befestigt ist und das Patchkabel zwischen den beiden Patchpanels gemäß der Erfindung ausgestaltet ist, lässt sich auf einfache Weise eine Identifizierung und Lokalisierung des Transponders durch das Lesegerät erreichen. Da zwischen den Antennenanordnungen und dem Lesegerät bzw. Transponder jeweils nur eine Nahfeldübertragung stattfindet, die im Zentimeterbereich oder noch darunter stattfindet, kann auf diese Weise in einem kleinen Arbeitsfeld, wie einem Serverraum, eine hohe Zahl von lokalisierbaren bzw. identifizierbaren Transpondern selektiert werden.

Wenn ein derartiges Verbindungskabel daher in einem System mit zwei zu identifizierenden und lokalisierenden Systemgeräte verwendet wird, ist es auf einfache Weise möglich, eine korrekte Verbindung der miteinander zu verbindender Systemgeräte zu überwachen.

Der Gegenstand der Erfindung ist insbesondere in solchen Einsatzszenarien von Vorteil einzusetzen, bei denen eine hohe Zahl von Kabelverbindungen auf engstem Raum vorhanden sind, die es jeweils ermöglichen, die miteinander zu verbindenden Geräte sicher zuzuordnen und gleichzeitig zu identifizieren.

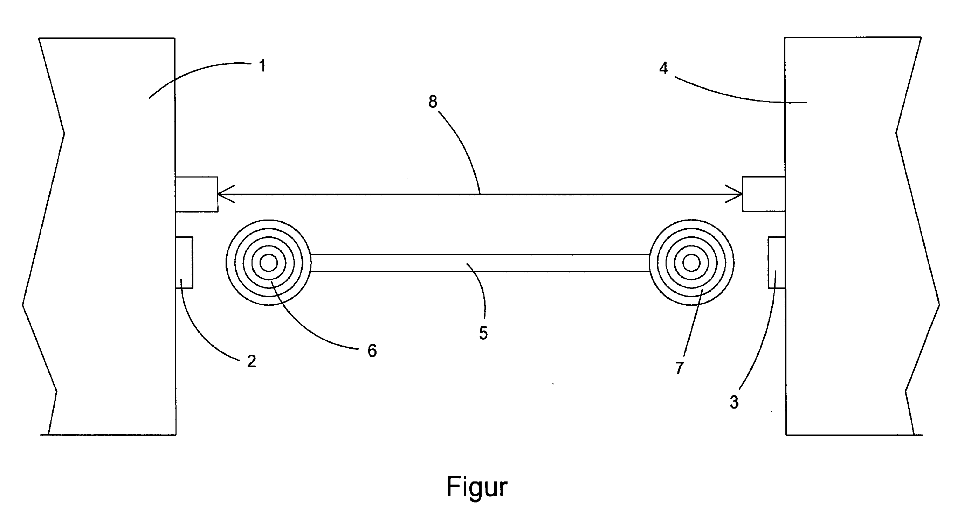

Die Erfindung wird nachstehend anhand eines Ausführungsbeispiels näher erläutert. Die einzige Figur zeigt eine schematische Ansicht der Erfindung

Die Figur zeigt ein erstes Systemgerät 1, das ein RFID-Sende-und Empfangsgerät 2 enthält. Bei dem ersten Systemgerät kann es sich beispielsweise um ein erstes Patchpanel handeln.

Ein zweites Systemgerät 4 enthält einen RFID-Transponder 3, wobei es sich bei dem zweiten Systemgerät um ein zweites Patchpanel oder ein beliebiges anderes Gerät handeln kann, das mit einem RFID-Transponder 3 versehen ist. Die Systemgeräte 1 und 4 sind über ein Verbindungskabel 8, beispielsweise ein Patchkabel, miteinander verbunden.

Obgleich es möglich wäre, bei genügend kleinem Abstand zwischen dem RFID-Sende-/Empfangsgerät 2 und RFID-Transponder 3 Ort und Identität eines Transponders festzustellen, ist bei Vorhandensein mehrerer nahe beieinander liegender zweiter Systemgeräte 4 keine örtliche Auflösung der Transponder mehr möglich. Unter erste und zweite Systemgeräte werden hier nicht nur Geräteeinheiten verstanden, sondern auch die jeweiligen Buchsen solcher Geräte. Bei einem Patchpanel mit 16 oder 32 Einzelbuchsen, die auf engstem Raum angeordnet sind, ist nachvollziehbar, dass gemäß Stand der Technik eine Lokalisierung der einzelnen Buchsen eines Patchpanels zugeordneten Transponder nur dann möglich ist, wenn Patchkabel verwendet werden, die jeweils eine eigene Identifizierung aufweisen. Gemäß der Erfindung können jedoch auch Verbindungskabel verwendet werden, die keine eigene Identifizierung enthalten. Ein erfindungsgemäßes Verbindungskabel 8 weist dazu an seinen jeweiligen Enden eine Antennenanordnung auf, die in der Figur beispielsweise als erste Antennenanordnung 6 am ersten Ende des Verbindungskabels 8 und als zweite Antennenanordnung 7 an einem zweiten Ende des Verbindungskabels 8 dargestellt sind. Die beiden Antennenanordnungen 6 und 7 sind über die Leitungsverbindung 5 elektrisch miteinander verbunden.

Die Funktion ergibt sich wie folgt:
Die RFID-Sende-/Empfangseinheit 2 induziert ein ausgesendetes Funksignal in die erste Antennenanordnung 6, die das empfangene Signal über die Leitungsverbindung 5 auf die zweite Antennenanordnung 7 am andere Ende des Verbindungskabels 8 weiterleitet. Das von der zweiten Antennenanordnung 7 ausgesendete Funksignal wird von dem in unmittelbarer Nähe befindlichen RFID-Transponder empfangen. Das Antwortsignal des Transponders 3 wird über die zweite Antennenanordnung 7, die Leitungsverbindung 5 und die erste Antennenanordnung 6 wieder zum Sende-/Empfangsgerät 2 zurückgesendet.

Bei dem Verbindungskabel kann es sich um beliebige Arten von Kabeln handeln, beispielsweise elektrische Datenleitungen, Telekommunikationsleitungen, Stromversorgungskabel oder auch Lichtwellenleiterkabel.

In einer weitergehenden Ausgestaltung der Erfindung kann vorgesehen sein, in die Leitungsverbindung zwischen den Antennenanordnungen eine mit einer externen Energiequelle betriebene Verstärkerschaltung einzubinden, um die zwischen den Antennenanordnungen übertragenen Signale, insbesondere die vom Transponder zurückgesandten Signale, bei langen Leitungsstrecken zu verstärken.

## Patentansprüche

1. Verbindungskabel zur elektrischen oder Lichtwellenleiterverbindung zweier mit jeweils einem Anschlusselement versehener Systemgeräte (1, 4) zur Übertragung elektrischer Energie oder Datensignale, wobei das erste und zweite Ende des Verbindungskabels (8) jeweils mit einem Kupplungselement zum Anschluss an ein Anschlusselement eines Systemgeräts versehen ist, **dadurch gekennzeichnet, dass** die Kupplungselemente jeweils mit einer Antennenanordnung (6,7) zur RFID-Kopplung mit einem in einem Systemgerät vorgesehenen RFID-Lesegerät bzw. RFID-Transponder ausgestattet sind, und dass die Antennenanordnungen (6,7) über eine Leitungsverbindung (5) elektrisch miteinander verbunden sind.

2. Verbindungskabel nach Anspruch 1, **dadurch gekennzeichnet, dass** die erste und/oder zweite Antennenanordnung (6, 7) Luftspulen enthalten.

3. Verbindungskabel nach Anspruch 1 oder 2, **dadurch gekennzeichnet, dass** die erste und/oder zweite Antennenanordnung (6, 7) ferritgebettete Spulen enthalten.

4. Verbindungskabel nach Anspruch 1, 2 oder 3, **dadurch gekennzeichnet, dass** die erste und/oder zweite Antennenanordnung (6, 7) um Ferritkerne gewickelte Spulen enthalten.

5. Verbindungskabel nach einem oder mehreren der vorhergehenden Ansprüche, **dadurch gekennzeichnet, dass** die Spulen der ersten und/oder zweiten Antennenanordnung (6, 7) als auf einer festen oder flexiblen Leiterplatte aufgedruckte Leiterbahnstrukturen gebildet sind.

6. Verbindungskabel nach einem oder mehreren der vorhergehenden Ansprüche, **dadurch gekennzeichnet, dass** die erste und/oder zweite Antennenanordnung (6, 7) auf die verwendeten RFID-Frequenzen abgestimmte Schwingkreise und/oder Anpassnetzwerke bilden.

7. Verbindungskabel nach Anspruch 6, **dadurch gekennzeichnet, dass** die Spulen einen Teil des abgestimmten Schwingkreises bilden.

8. Verbindungskabel nach Anspruch 1, **dadurch gekennzeichnet, dass** die erste und zweite Antennenanordnung (6,7) durch eine geschirmte oder ungeschirmte Zweidrahtleitung mit parallelen oder verdrillten Drähten oder eine Koaxialleitung miteinander verbunden sind.

9. Verbindungskabel nach Anspruch 1, **dadurch gekennzeichnet, dass** die Antennenanordnungen durch eine parallel zum Verbindungskabel verlaufende elektrische Leitungsverbindung (5) gekoppelt sind.

10. Verbindungskabel nach Anspruch 1, **dadurch gekennzeichnet, dass** die Leitungsverbindung (5) an der Außenseite des Verbindungskabels (8) befestigt ist.

11. Verbindungskabel nach Anspruch 1, **dadurch gekennzeichnet, dass** die Antennenanordnungen (6,7) in die Kupplungselemente des Verbindungskabels (8) integriert sind.

12. Verbindungskabel nach Anspruch 1, **dadurch gekennzeichnet, dass** das Verbindungskabel (8) eine Stromversorgungsleitung oder eine Datenübertragungsleitung ist.

13. Verbindungskabel nach einem der Ansprüche 1 oder 9 - 12, **dadurch gekennzeichnet, dass** in die Leitungsverbindung zwischen den Antennenanordnungen eine durch eine externe Energiequelle betriebene Verstärkerschaltung zur Verstärkung der zwischen den Antennenanordnungen übertragenen Signale eingeschaltet ist.

14. System mit einem Verbindungskabel nach einem oder mehreren der Ansprüche 1 - 13, mit einem RFID transponder und mit einem als Sende-/Empfangseinheit (2) ausgebildeten RFID-Lesegerät, wobei der RFID-Transponder (3) in Antwort auf ein von der Sende-/Empfangseinheit (2) empfangenes Signal ein Antwortsignal zum Empfang an der Sende-/Empfangseinheit (2) absendet.

## Claims

1. Connecting cable for electrical connection or optical-waveguide connection of two system devices (1, 4), each provided with a terminal element, for transmitting electrical energy or data signals, the first end and the second end of the connecting cable (8) each being provided with a coupling element for connecting to a terminal element of a system device, **characterised in that** the coupling elements have each been equipped with an antenna arrangement (6, 7) for RFID coupling with an RFID reader or RFID transponder provided in a system device, and **in that** the antenna arrangements (6, 7) have been electrically connected to one another via a line connection (5).

2. Connecting cable according to Claim 1, **characterised in that** the first and/or second antenna arrangement (6, 7) contain(s) air coils.

3. Connecting cable according to Claim 1 or 2, **characterised in that** the first and/or second antenna arrangement (6, 7) contain(s) ferrite-embedded coils.

4. Connecting cable according to Claim 1, 2 or 3, **characterised in that** the first and/or second antenna arrangement (6, 7) contain(s) coils wound around ferrite cores.

5. Connecting cable according to one or more of the preceding claims, **characterised in that** the coils of the first and/or second antenna arrangement (6, 7) have been formed as conductor-track structures printed on a solid or flexible printed circuit board.

6. Connecting cable according to one or more of the preceding claims, **characterised in that** the first and/or second antenna arrangement (6, 7) form(s) oscillating circuits and/or matching networks tuned to the RFID frequencies being used.

7. Connecting cable according to Claim 6, **characterised in that** the coils form a part of the tuned oscillating circuit.

8. Connecting cable according to Claim 1, **characterised in that** the first and second antenna arrangements (6, 7) have been connected to one another by a shielded or unshielded two-wire line having parallel or twisted wires, or by a coaxial line.

9. Connecting cable according to Claim 1, **characterised in that** the antenna arrangements have been coupled by an electrical line connection (5) running parallel to the connecting cable.

10. Connecting cable according to Claim 1, **characterised in that** the line connection (5) has been fastened to the outside of the connecting cable (8).

11. Connecting cable according to Claim 1, **characterised in that** the antenna arrangements (6, 7) have been integrated into the coupling elements of the connecting cable (8).

12. Connecting cable according to Claim 1, **characterised in that** the connecting cable (8) is a power supply line or a data transmission line.

13. Connecting cable according to one of Claims 1 or 9-12, **characterised in that** an amplifier circuit operated by an external energy source for amplifying the signals transmitted between the antenna arrangements has been inserted into the line connection between the antenna arrangements.

14. System with a connecting cable according to one or more of Claims 1-13 with an RFID transponder and with an RFID reader taking the form of a transmit/receive unit (2), wherein the RFID transponder (3) in response to a signal received from the transmit/receive unit (2) sends a response signal for reception at the transmit/receive unit (2).

## Revendications

1. Câble de connexion pour la connexion électrique ou optique de deux appareils de système (1, 4) pourvus chacun d'un élément de raccordement, pour transmettre de l'énergie électrique ou des signaux de données, étant précisé que les première et seconde extrémités du câble de connexion (8) sont pourvues chacun d'un élément d'accouplement pour le raccordement à un élément de raccordement d'un appareil de système, **caractérisé en ce que** les éléments d'accouplement sont équipés chacun d'un dispositif formant antenne (6, 7) pour l'accouplement d'identification par radiofréquence RFID à un lecteur RFID et à un transpondeur RFID prévu dans l'appareil de système, et **en ce que** les dispositifs formant antennes (6, 7) sont reliés électriquement entre eux par une liaison par ligne (5).

2. Câble de connexion selon la revendication 1, **caractérisé en ce que** les premier et/ou second dispositifs formant antennes (6, 7) contiennent des bobines à air.

3. Câble de connexion selon la revendication 1 ou 2, **caractérisé en ce que** les premier et/ou second dispositifs formant antennes (6, 7) contiennent des bobines enrobées de ferrite.

4. Câble de connexion selon la revendication 1, 2 ou 3, **caractérisé en ce que** les premier et/ou second dispositifs formant antennes (6, 7) contiennent des bobines enroulées sur des noyaux de ferrite.

5. Câble de connexion selon l'une au moins des revendications précédentes, **caractérisé en ce que** les bobines des premier et/ou second dispositifs formant antennes (6, 7) sont conçues comme des structures de pistes imprimées sur une carte dure ou flexible.

6. Câble de connexion selon l'une au moins des revendications précédentes, **caractérisé en ce que** les premier et/ou second dispositifs formant antennes (6, 7) forment des circuits oscillants et/ou des réseaux d'adaptation accordés aux fréquences RFID utilisées.

7. Câble de connexion selon la revendication 6, **caractérisé en ce que** les bobines forment une partie du circuit oscillant accordé.

8. Câble de connexion selon la revendication 1, **caractérisé en ce que** les premier et second dispositifs formant antennes (6, 7) sont reliés entre eux par une ligne à deux fils, blindée ou non blindée, avec des fils parallèles ou torsadés, ou par une ligne coaxiale.

9. Câble de connexion selon la revendication 1, **caractérisé en ce que** les dispositifs formant antennes sont accouplés par une liaison par ligne électrique (5) parallèle au câble de connexion.

10. Câble de connexion selon la revendication 1, **caractérisé en ce que** la liaison par ligne (5) est fixée au côté extérieur du câble de connexion (8).

11. Câble de connexion selon la revendication 1, **caractérisé en ce que** les dispositifs formant antennes (6, 7) sont intégrés dans les éléments d'accouplement du câble de connexion (8).

12. Câble de connexion selon la revendication 1, **caractérisé en ce que** le câble de connexion (8) est constitué par une ligne d'alimentation électrique ou une ligne de transmission de données.

13. Câble de connexion selon l'une au moins des revendications 1 ou 9 à 12, **caractérisé en ce qu'**un circuit amplificateur commandé par une source d'énergie extérieure et destiné à amplifier les signaux transmis entre les dispositifs formant antennes est monté dans la liaison par ligne entre les dispositifs formant antennes.

14. Système avec un câble de connexion selon l'une au moins des revendications 1 à 13, avec un transpondeur RFID et un lecteur RFID conçu comme une unité d'émission/réception (2), étant précisé que le transpondeur RFID (3), en réponse à un signal reçu de l'unité d'émission/réception (2), envoie un signal de réponse pour une réception au niveau de l'unité d'émission/réception (2).
